# FASCICULE DE BREVET EUROPEEN

(11) **EP 3 395 289 B1**
(45) Date de publication et mention de la délivrance du brevet: **14.07.2021**
(21) Numéro de dépôt: 18169820.0
(22) Date de dépôt: 27.04.2018
(51) Int. Cl.: A61C 13/00

(54) **BLOC DE FABRICATION DE DISPOSITIFS DENTAIRES**
HERSTELLUNGSBLOCK FÜR DENTALVORRICHTUNGEN
BLANK FOR MANUFACTURING DENTAL DEVICES

(30) Priorité: 28.04.2017 FR 1753742
(43) Date de publication de la demande: 31.10.2018
(73) Titulaire: Cabinet Dentaire Vinci, 74950 Scionzier (FR)
(72) Inventeur: VINCI, Salvatore, 74950 Scionzier (FR)
(74) Mandataire: Croonenbroek, Thomas Jakob

(56) Documents cités:
- EP-A2- 2 286 759
- WO-A1-2017/211427
- WO-A2-2009/016223
- US-A1- 2004 241 614

## Description

La présente invention se rapporte à un ensemble comportant une machine d'usinage et un bloc permettant la fabrication de dispositifs dentaires.

De nos jours, pour le confort des patients et pour proposer un service rapide, les chirurgiens-dentistes peuvent réaliser des prothèses dentaires directement dans leur cabinet afin de permettre au patient de retrouver au plus vite un confort dentaire.

En fonction de la pathologie observée par le dentiste, on peut prévoir des interventions différentes pour soigner une dent abimée.

Ainsi par exemple, il est connu de disposer un élément intermédiaire en un matériau biocompatible en métal ou matériau composite, dénommé inlay-core, formé d'une part une ou plusieurs extension(s), appelée(s) tige(s) radiculaire(s), dont la forme est adaptée pour se loger dans la ou les racines de la dent à remplacer, et d'autre part une partie de fixation destinée à dépasser de la gencive sur laquelle est fixée la prothèse. La prothèse peut être fixée sur cette partie de fixation par collage ou scellage. Lorsqu'il ne reste que peu de paroi dentaire et pour recréer une base stabilisatrice pour la prothèse, la reconstitution d'un moignon par implantation d'un inlay-core est préconisée.

La fabrication de l'inlay-core est complexe, étant donné que la ou les tiges radiculaires doivent prendre la forme spécifique des racines du patient.

La forme spécifique de l'inlay-core doit donc toujours être adaptée à la forme de la ou des ouverture(s) pratiquée(s) par le dentiste à l'aide d'une fraise dans la dent abimée.

Sa réalisation est notamment indiquée dans la reconstitution d'un moignon lorsqu'il ne reste que peu de paroi dentaire afin de recréer un support stabilisateur, sustentateur, pour la prothèse, de type couronne, qui sera réalisée par-dessus.

Différentes techniques pour la fabrication d'un inlay-core sont connues.

Selon une méthode traditionnelle manuelle, connue sous le nom de méthode à cire perdue, on dispose une matière de type silicone ou équivalent au sein de la racine, servant de base à la détermination de la forme des tiges radiculaires du inlay-core à fabriquer.

Sur cette base, un prothésiste peut ensuite sculpter une maquette, puis former un moule négatif à partir de la maquette en cire, permettant ensuite de couler l'inlay-core définitif dans une matière rigide et adaptée de type métal ou matière composite, de forme identique à la maquette en cire.

Toutefois, cette méthode est longue et fastidieuse et nécessite que le patient se déplace à plusieurs reprises.

Plus récemment, il a été proposé de réaliser un tel inlay-core directement par usinage de précision d'un bloc en métal ou en matière composite.

Dans ce cas on enlève de la matière par usinage sur un bloc de fabrication en une matière très dure et présentant une composition compatible avec une utilisation humaine ou animale et répondant donc aux contraintes mécaniques sollicitées par les dents.

A cet effet, il existe des machines d'usinage permettant de telles fabrications sur place au sein du cabinet dentaire ainsi que des blocs de fabrication de dispositifs dentaires destinés à être installés dans ces machines d'usinage.

Les machines d'usinage utilisées par les chirurgiens-dentistes pour la fabrication de ces prothèses dentaires sont généralement des machines d'usinage 4 axes ou 5 axes avec des fonctions limitées pour des raisons de tarif et d'encombrement. Du fait de la dureté de la matière à usiner, ces machines d'usinage mettent en œuvre un outil abrasif, comme par exemple une fraise, qui se déplace seulement selon une direction verticale.

Par ailleurs, le bloc de fabrication peut être déplacé dans un plan horizontal perpendiculaire à la direction verticale de l'outil abrasif.

Un autre axe de travail est par exemple constitué par un axe de rotation orienté perpendiculaire à l'axe de l'outil abrasif afin de permettre la rotation du bloc de fabrication à l'intérieur de la machine d'usinage.

Actuellement, les blocs de fabrication connus ne peuvent être fixés dans la machine d'usinage que selon une seule orientation.

Or, cela restreint la géométrie des dents qui peuvent être fabriquées dans un tel bloc de fabrication.

On connaît des documents WO 2009/016223 et EP2286759, un bloc de fabrication pour la fabrication de prothèses dentaires présentant des structures de codage permettant à la machine d'usinage de convertir le code en des informations relatives aux dimensions de la partie usinable en déplaçant des outils d'usinage, comme par exemple des fraises, dans ces structures. Toutefois, de telles structures ne permettent pas de définir différentes positions d'usinage de ce bloc de fabrication. De plus, de telles structures ne permettent pas de prévenir des défauts d'usinage résultants de vibrations subies par le bloc de fabrication au cours de son usinage.

Un objectif de la présente invention est de palier au moins partiellement aux inconvénients de l'état de la technique énoncés ci-dessus.

Un autre objectif de la présente invention est de proposer un bloc de fabrication d'un dispositif dentaire permettant la fabrication de dispositifs dentaires présentant le plus de géométries possibles.

Un autre objectif de la présente invention, différent des objectifs précédents, est de proposer un bloc de fabrication d'un dispositif dentaire dont les vibrations au cours de son usinage peuvent être prévenues.

A cet effet, pour atteindre au moins un des objectifs précités au moins partiellement, la présente invention a pour objet un ensemble comportant une machine d'usinage et un bloc de fabrication de dispositifs dentaires d'au moins une première taille et d'une deuxième taille, comprenant au moins une partie usinable de forme sensiblement parallélépipédique, dont la longueur d'au moins un côté est différente de la longueur des autres côtés, destinée à être usinée pour former le dispositif dentaire, et un arbre de maintien destiné à permettre la fixation du bloc de fabrication dans une machine d'usinage, l'ensemble étant caractérisé en ce que le bloc de fabrication comprend en outre au moins deux éléments de positionnement angulaire disposés au niveau du point de liaison entre la partie usinable et l'arbre de maintien et agencés selon des orientations perpendiculaires entre elles, lesdits éléments de positionnement angulaire coopérant avec des moyens complémentaires portés par la machine d'usinage de manière à servir de référence pour l'installation du bloc de fabrication dans la machine d'usinage pour définir une première position de référence d'usinage et une deuxième position de référence d'usinage perpendiculaire à la première position.

La présence des au moins deux éléments de positionnement angulaire permet d'installer le bloc de fabrication, présentant des surfaces usinables différentes deux à deux, selon deux orientations différentes perpendiculaires l'une de l'autre, ce qui permet d'augmenter le nombre de géométries d'usinage possibles et de réduire les chutes liées à l'usinage du bloc de fabrication. De plus, une telle disposition des éléments de positionnement angulaire permet à ces derniers d'absorber les vibrations subies par le bloc de fabrication au cours de son usinage.

Le bloc de fabrication d'un dispositif dentaire selon la présente invention peut comporter en outre une ou plusieurs des caractéristiques suivantes prises seules ou en combinaison.

Selon la présente invention, le dispositif dentaire de première taille correspond à une incisive ou à un inlay-core pour une canine et le dispositif dentaire de deuxième taille correspond à une molaire ou à un inlay-core pour une molaire.

Selon un mode de réalisation particulier, le bloc de fabrication comprend quatre éléments de positionnement angulaire formant une première paire d'éléments de positionnement angulaire et une deuxième paire d'éléments de positionnement angulaire, chaque paire d'éléments de positionnement angulaire présentant deux éléments de positionnement angulaire disposés de part et d'autre de l'arbre de maintien et alignés l'un avec l'autre selon une première orientation pour la première paire d'éléments de positionnement angulaire et selon une deuxième orientation pour la deuxième paire d'éléments de positionnement angulaire, lesdites première et deuxième orientations étant perpendiculaires entre elles.

Selon un aspect, les au moins deux éléments de positionnement angulaire correspondent à des retraits de matière, correspondant à une partie femelle, destinés à coopérer avec des protubérances, correspondant à une partie mâle, portées par la machine d'usinage.

Selon un mode de réalisation particulier, la partie usinable présente un premier côté parallèle à l'arbre de maintien et dont la longueur est comprise entre 12,0 et 22,0 mm, un deuxième côté perpendiculaire à l'arbre de maintien et dont la longueur est comprise entre 14,0 et 20,0 mm, et un troisième côté perpendiculaire à l'arbre de maintien et dont la longueur comprise entre 12,0 et 19,0 mm.

Selon ce mode de réalisation particulier, le premier côté présente une longueur correspondant à une seule prothèse ou à plusieurs prothèses juxtaposées à fabriquer.

D'une manière préférée, la partie usinable est réalisée en un matériau présentant des caractéristiques de hautes performances mécaniques, d'usinabilité et/ou de biocompatibilité, notamment un matériau plastique, un matériau métallique, ou un matériau composite, et comprenant au moins un additif de renforcement mécanique présentant une concentration massique comprise entre 17 et 40 %, de préférence comprise entre 25 et 30 %, de la masse de matériau composant au moins la partie usinable lorsque la partie usinable est réalisée en un matériau plastique ou en un matériau composite.

Selon une première variante, les matériaux plastiques pouvant constituer la partie usinable sont choisis parmi les polymères thermoplastiques de la famille des acryliques, tel qu'un polyméthacrylate de méthyle (PMMA), un styrène-acrylonitrile (SAN) ou encore un N-acryloxysuccinimide (NAS), de la famille des polyéther-éthercétones (PEEK), de la famille des polyimides thermoplastiques, tel qu'un polyétherimide (PEI), de la famille des polysulfones, tel qu'un polyéthersulfone (PES), de la famille des polyacétals, tel qu'un polyoxyméthylène (POM), ou encore de la famille des polyamides (PA).

Selon une autre variante, la partie usinable peut être constituée de matériaux composites comme des céramiques ou des céramiques au disilicate de lithium

Selon encore une autre variante, la partie usinable peut être constituée de métaux comme de l'argent, du cuivre, du fer, du nickel, du cobalt, du molybdène, du chrome, de l'or, du platine, du palladium, du titane, ou encore un alliage de ces différents métaux.

Avantageusement, afin d'améliorer la résistance mécanique du dispositif dentaire, la partie usinable comprend un additif choisi parmi de la fibre de verre, des particules de verre, de zircone, de céramique, de titane métallique, ou encore d'un alliage chrome-cobalt.

Selon un mode de réalisation préféré, le matériau dans lequel est réalisée la partie usinable comprend en outre un composé additionnel radio-opaque lorsque la partie usinable est réalisée en un matériau plastique ou en un matériau composite, et de préférence du baryum ou de l'alumine.

Avantageusement, la partie usinable est fabriquée en un matériau transparent, translucide, ou coloré pouvant être coloré ou teinté notamment selon un dégradé de couleurs ou de teintes.

Selon un mode de réalisation préféré, le bloc de fabrication présente en outre une base disposée entre la partie usinable et l'arbre de maintien, et en ce que ladite base comporte les au moins deux éléments de positionnement angulaire.

Selon ce mode de réalisation, la base présente une forme sensiblement cylindrique.

Selon une première variante, la partie usinable et l'arbre de maintien sont réalisés d'une seule pièce.

Selon une deuxième variante, la partie usinable et l'arbre de maintien sont deux pièces distinctes fixées l'une à l'autre.

Selon cette deuxième variante, la partie usinable et l'axe de maintien sont réalisés en des matériaux distincts.

Avantageusement, le bloc de fabrication d'un dispositif dentaire est fabriqué en :
- un matériau injectable, notamment un matériau plastique, composite, céramique ou un métal injectable, ou
- un matériau usinable, notamment un matériau plastique, composite, céramique, ou un métal usinable, ou
- un matériau imprimable en 3D, notamment en matériau sous forme solide ou liquide, photopolymérisable ou non, en plastique, en résine composite, en métal, en céramique, ou encore en un matériau biologique imprimable en 3D.

Selon un mode de réalisation particulier, l'arbre de maintien présente une forme sensiblement cylindrique.

Selon un aspect, le bloc de fabrication est mono-injecté en résine.

Selon un mode de réalisation particulier, la forme sensiblement parallélépipédique de la partie usinable présente des arêtes nettes.

Selon un autre mode de réalisation particulier, la forme sensiblement parallélépipédique de la partie usinable présente des arêtes arrondies.

D'autres caractéristiques et avantages de la présente invention apparaîtront plus clairement à la lecture de la description suivante, donnée à titre d'exemple illustratif et non limitatif, ainsi que des dessins annexés dans lesquels :
- la figure 1 est une représentation schématique en perspective d'un bloc de fabrication d'un dispositif dentaire selon la présente invention,
- la figure 2 est une représentation schématique en coupe transversale au niveau d'une base du bloc de fabrication d'un dispositif dentaire,
- la figure 3 est une représentation schématique latérale d'un bloc de fabrication d'un dispositif dentaire selon un premier mode de réalisation,
- la figure 4 est une représentation schématique latérale d'un bloc de fabrication d'un dispositif dentaire selon un deuxième mode de réalisation,
- la figure 5A est une représentation schématique latérale en perspective d'un dispositif dentaire d'une première taille usiné dans un bloc de fabrication selon l'invention,
- la figure 5B est une représentation schématique de face du dispositif dentaire de première taille de la figure 5A,
- la figure 6A est une représentation schématique latérale en perspective d'un dispositif dentaire d'une deuxième taille usiné dans un bloc de fabrication selon l'invention,
- la figure 6B est une représentation schématique de face du dispositif dentaire de deuxième taille de la figure 6A,
- la figure 7 est une représentation schématique de l'intérieur d'une machine d'usinage présentant un bloc de fabrication d'un dispositif dentaire selon l'invention en train d'être usiné,
- la figure 8A est une photographie de profil d'un bloc de fabrication d'un dispositif dentaire selon un mode de réalisation particulier, et
- la figure 8B est une photographie de face du bloc de fabrication de la figure 8A.

Sur ces figures, les éléments identiques portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description suivante, il est fait référence à une première et à une deuxième tailles de dispositifs dentaires, à une première et à une deuxième paires d'éléments de positionnement angulaire, à une première et à une deuxième orientations pour les éléments de positionnement angulaire, à une première et une deuxième couleurs pour les paires d'éléments de positionnement angulaire, ou encore à une première et une deuxième surfaces usinables. Il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps par exemple pour apprécier le positionnement du bloc de fabrication dans la machine d'usinage ou pour apprécier le procédé de fabrication du dispositif dentaire obtenu par usinage de ce bloc de fabrication.

Dans la description suivante, on entend par « céramiques », un article ayant un corps vitrifié ou non, de structure cristalline ou partiellement cristalline, ou un verre, dont le corps est formé de substances essentiellement inorganiques et non-métalliques, et qui est formé par une masse en fusion qui se solidifie en se refroidissant, ou qui est formé et porté à maturité en même temps ou ultérieurement, par action de la chaleur.

Par ailleurs, on entend dans la description suivante par « horizontal », une direction parallèle à l'horizon. De même, on entend par « vertical », une direction perpendiculaire à l'horizon. D'autre part, on entend par « direction longitudinale », une direction perpendiculaire à la direction verticale et à la direction horizontale.

De plus, on entend par « radio-opaque », dans la description suivante, tout élément ou matériau opaque aux rayonnements ionisants tels que les rayons X utilisés dans le domaine de la radiographie.

Ensuite, dans la description suivante, on entend par « machine d'usinage » aussi bien une machine de fraisage à sec qu'une machine d'usinage en milieu humide, cette machine d'usinage correspondant à une machine 4 axes ou 5 axes, c'est-à-dire présentant trois axes d'usinages perpendiculaires entre eux, et un axe de rotation parallèle à un des axes d'usinage et sensiblement perpendiculaire à l'axe de rotation de l'outil abrasif équipant cette machine d'usinage et le cas échéant un axe de pivotement du bloc à usiner.

D'autre part, on entend dans la description suivante par « inlay-core », un dispositif dentaire permettant de remplacer toute reconstruction pré-coronaire destiné à être placé dans la racine d'une dent permettant d'assurer sa reconstruction avant la pose d'une couronne (céramique ou métallique) lorsque cette dent est délabrée et donc impropre à supporter une couronne. Un inlay-core est également dénommé faux moignon. Un inlay-core présente un pied destiné à s'insérer dans la racine de la dent à couronner et un chapeau qui recouvre la partie coronaire de la dent sur lequel la couronne vient se fixer ultérieurement.

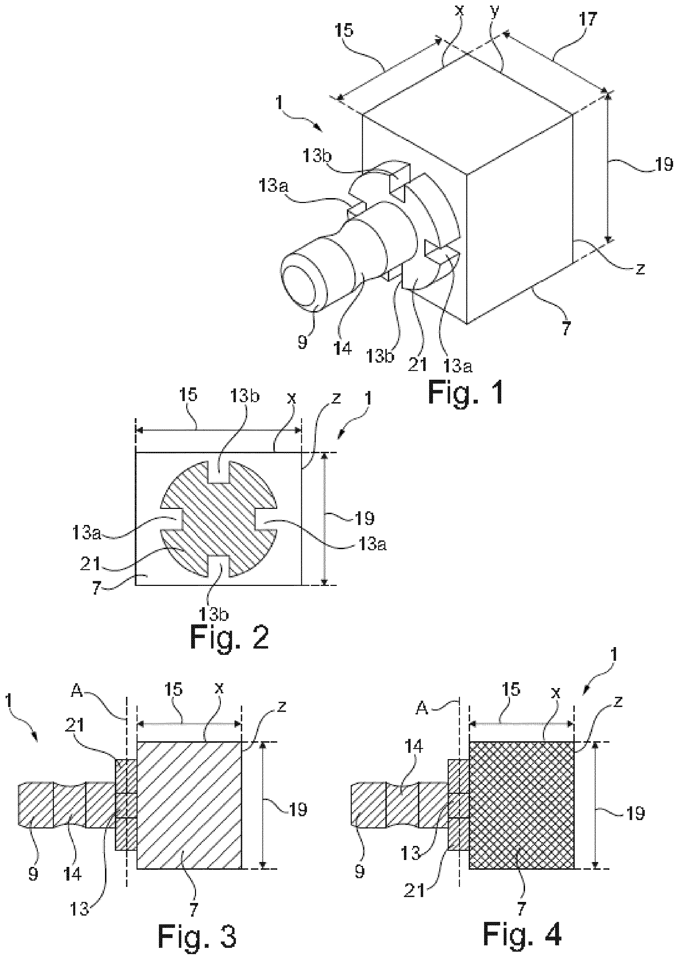

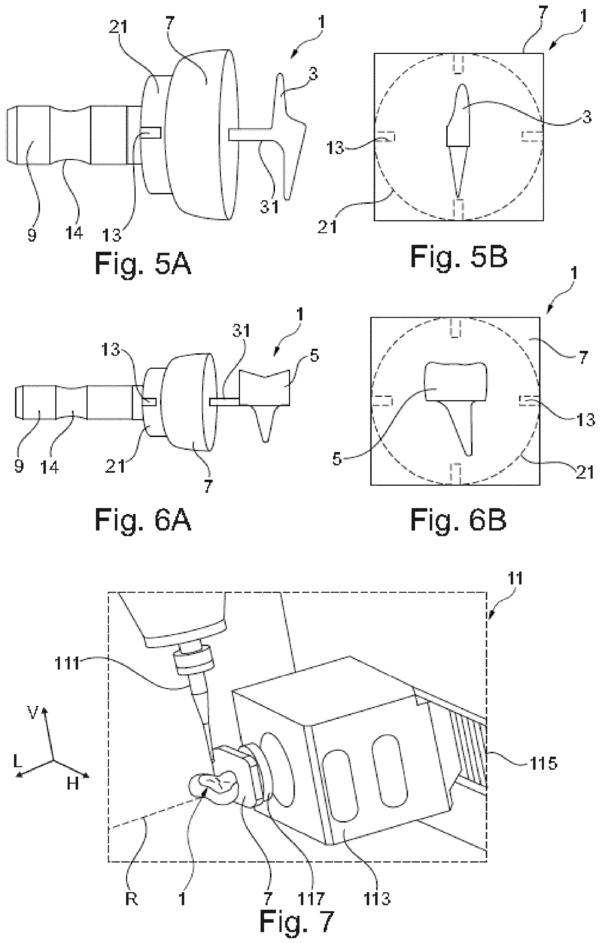

En référence aux figures 1 à 4, il est représenté un bloc de fabrication 1 de dispositifs dentaires d'au moins une première taille 3 (figures 5A et 5B) et d'une deuxième taille 5 (figures 6A et 6B), notamment une prothèse dentaire, un guide chirurgical ou une parure dentaire. Le bloc de fabrication 1 comprend au moins une partie usinable 7, un arbre de maintien 9, et au moins deux éléments de positionnement angulaire 13.

La partie usinable 7 présente une forme sensiblement parallélépipédique dont la longueur d'au moins un côté est différente de la longueur des autres côtés. Par forme sensiblement parallélépipédique, on entend non seulement une forme générale parallélépipédique présentant des arêtes nettes (comme représenté en référence aux figures 1 à 4), c'est-à-dire formant notamment un angle droit, mais aussi présentant des arêtes arrondies. Cette partie usinable 7 est destinée à être usinée pour former le dispositif dentaire 3, 5. En effet, les chirurgiens-dentistes peuvent aujourd'hui fabriquer des prothèses dentaires directement dans leur cabinet sans solliciter un laboratoire spécialisé dans le domaine de la fabrication des prothèses dentaires par exemple. De tels dispositifs dentaires 3, 5 sont fabriqués par enlèvement de matière afin de former une copie de la (ou des) dent(s) du patient. Selon l'invention, la partie usinable 7 est réalisée en un matériau présentant des caractéristiques de hautes performances mécaniques, d'usinabilité et/ou de biocompatibilité. En effet, il est nécessaire que le matériau utilisé présente des propriétés de résistance mécanique suffisantes pour pouvoir remplacer la (ou les) dent(s) du patient. Par ailleurs, pour éviter tout problème de type infectieux ou un rejet du dispositif dentaire 3, 5 implanté par exemple, il est nécessaire que le matériau utilisé pour la fabrication du dispositif dentaire 3, 5 présente une bonne biocompatibilité.

Des matériaux présentant de telles caractéristiques pour constituer la partie usinable 7 peuvent notamment être un matériau plastique, un matériau métallique, ou un matériau composite, et comprenant au moins un additif de renforcement mécanique présentant une concentration massique comprise entre 17 et 40 %, de préférence comprise entre 25 et 30 %, de la masse de matériau composant au moins la partie usinable 7 lorsque la partie usinable 7 est réalisée en un matériau plastique ou en un matériau composite.

Plus précisément, des matériaux plastiques tels que des polymères thermoplastiques de la famille des acryliques, tel qu'un polyméthacrylate de méthyle (PMMA), un styrène-acrylonitrile (SAN) ou encore un N-acryloxysuccinimide (NAS), de la famille des polyéther-éthercétones (PEEK), de la famille des polyimides thermoplastiques, tel qu'un polyétherimide (PEI), de la famille des polysulfones, tel qu'un polyéthersulfone (PES), de la famille des polyacétals, tel qu'un polyoxyméthylène (POM), ou encore de la famille des polyamides (PA).

Selon une alternative, la partie usinable 7 peut être constituée de matériaux composite comme des céramiques ou des céramiques au disilicate de lithium.

Selon une autre variante, la partie usinable 7 peut être constituée de métaux comme de l'argent, du cuivre, du fer, du nickel, du cobalt, du molybdène, du chrome, de l'or, du platine, du palladium, du titane, ou encore un alliage de ces différents métaux.

De plus, afin de renforcer la résistance mécanique du dispositif dentaire 3, 5 obtenu après usinage lorsque la partie usinable 7 est réalisée en un matériau plastique ou en un matériau composite, la partie usinable 7 comprend un additif choisi parmi de la fibre de verre, des particules de verre, de zircone, de céramique, de titane métallique, ou encore d'un alliage chrome-cobalt. De plus, selon cette variante, afin de mieux identifier la présence de dents artificielles, le matériau dans lequel est réalisée la partie usinable 7 comprend en outre un composé additionnel radio-opaque, et de préférence du baryum ou de l'alumine. En effet, cet élément absorbe les rayons X émis lors de la prise d'un cliché lors d'une radiographie. Ainsi, les dents artificielles sont visibles sur celui-ci, ce qui peut aider le chirurgien-dentiste à identifier rapidement la présence du dispositif dentaire 3, 5.

Par ailleurs, pour des conditions esthétiques et pratiques, la partie usinable 7 est fabriquée en un matériau transparent, translucide, ou coloré pouvant être coloré ou teinté notamment selon un dégradé de couleurs ou de teintes. En effet, le chirurgien-dentiste peut être amené à adapter la couleur du dispositif dentaire 3, 5 à la couleur des dents existantes pour des raisons esthétiques et pour le confort ultérieur du patient. Ainsi, il est nécessaire d'avoir des blocs de fabrication 1 qui présentent soit la coloration de la dentition du patient, soit qui permettent sa coloration ultérieure.

En référence aux figures 1 à 4, l'arbre de maintien 9 est destiné à permettre la fixation du bloc de fabrication 1 dans une machine d'usinage 11 (représentée partiellement sur la figure 7), et plus particulièrement au niveau d'un mandrin 117 (visible sur la figure 7) d'une telle machine d'usinage 11. L'arbre de maintien 9 est disposé sur une des faces de la partie usinable 7 et s'étend perpendiculairement à cette face. Par ailleurs, l'arbre de maintien 9 s'étend parallèlement à l'axe de rotation R (visible sur la figure 7) du bloc de fabrication 1 dans la machine d'usinage 11. Les chirurgiens-dentistes sont souvent équipés de telles machines d'usinage 11 car elles présentent un faible encombrement et restent assez bon marché. Par ailleurs, il est nécessaire que la partie usinable 7 soit maintenue en place au cours de son usinage comme toute autre pièce lors d'un usinage pour des raisons de sécurité et pour garantir le résultat obtenu après usinage. En effet, si la pièce à usiner n'est pas maintenue en place au cours de son usinage, celle-ci peut être amenée à se déplacer, notamment du fait de vibrations liées à son usinage par une fraise par exemple, pouvant provoquer ainsi des défauts d'usinage par exemple.

Par ailleurs, les éléments de positionnement angulaire 13 sont disposés au niveau du point de liaison entre la partie usinable 7 et l'arbre de maintien 9 de manière à coopérer avec des moyens complémentaires portés par la machine d'usinage 11. Avantageusement, ces éléments de positionnement angulaire 13 sont agencés selon des orientations perpendiculaires entre elles. Ces éléments de positionnement angulaire 13 sont destinés à servir de référence pour l'installation du bloc de fabrication 1 dans la machine d'usinage 11 pour définir une première position de référence d'usinage et une deuxième position d'usinage perpendiculaire à la première position.

En effet, la présence de ces éléments de positionnement angulaire 13 permet d'installer le bloc de fabrication 1 dans la machine d'usinage 11 afin d'usiner la face du bloc de fabrication 1 souhaitée. En effet, le bloc de fabrication 1 peut présenter différentes dimensions, et notamment des faces présentant des surfaces d'usinage différentes, et il est nécessaire, de placer le bloc de fabrication 1 de manière adéquate selon la première ou la seconde position de référence d'usinage dans la machine d'usinage 11 afin de réaliser l'usinage adapté pour obtenir le dispositif dentaire 3, 5 souhaité.

Par ailleurs, la présence des éléments de positionnement angulaire 13 permettent de stabiliser la partie usinable 7 lors de son usinage pour permettre la fabrication du dispositif dentaire 3, 5. En effet, la disposition selon des orientations perpendiculaires entre elles des au moins deux éléments de positionnement angulaire 13 permettent une bonne répartition de ces vibrations. Ainsi, la partie usinable 7 est moins amenée à vibrer, et donc à se déplacer, lors de son usinage et les défauts d'usinage du dispositif dentaire 3, 5 peuvent être prévenus.

Selon le mode de réalisation particulier des figures 1 et 2, le bloc de fabrication 1 présente en outre une base 21 disposée entre la partie usinable 7 et l'arbre de maintien 9. De plus, la base 21 présente une forme sensiblement cylindrique et fait saillie de la partie usinable 7. Selon d'autres variantes non représentées, la base 21 peut présenter une forme permettant de jouer un rôle dans le positionnement angulaire, comme par exemple une forme triangulaire ou une forme d'étoile coopérant avec des moyens complémentaires portés par la machine d'usinage 11. Par ailleurs, la base 21 comporte les au moins deux éléments de positionnement angulaire 13. En référence aux figures 1 et 2, les au moins deux éléments de positionnement angulaire 13 correspondent à de retraits de matière destinés à coopérer avec des protubérances portées par la machine d'usinage 11. En effet, les machines d'usinage présentent généralement des protubérances telles que des pions ou des doigts par exemple afin de permettre le positionnement de l'objet à usiner. Selon une variante non représentée ici, ces éléments de positionnement angulaire 13 peuvent être des protubérances destinées à coopérer avec des ouvertures présentes sur la machine d'usinage 11. Ainsi, la coopération du bloc de fabrication 1 avec la machine d'usinage 11 se fait selon un système mâle/femelle, ce qui permet notamment d'assurer la stabilité de ce bloc de fabrication 1 au cours de son usinage, notamment en absorbant les vibrations subies. De plus, un tel système mâle/femelle permet de faciliter le positionnement du bloc de fabrication 1 dans la machine d'usinage 11 selon la position d'usinage choisie.

Selon le mode de réalisation particulier de la figure 1, le bloc de fabrication 1 comprend quatre éléments de positionnement angulaire 13 formant une première paire d'éléments de positionnement angulaire 13a et une deuxième paire d'éléments de positionnement angulaire 13b. Selon ce mode de réalisation, chaque paire d'éléments de positionnement angulaire 13a, 13b présente deux éléments de positionnement angulaire 13 disposés de part et d'autre de l'arbre de maintien 9 et alignés l'un avec l'autre selon une première orientation pour la première paire d'éléments de positionnement angulaire 13a et selon une deuxième orientation pour la deuxième paire d'éléments de positionnement angulaire 13b. Selon ce mode de réalisation particulier, les éléments de positionnement angulaire 13 correspondent à des retraits de matière de forme sensiblement parallélépipédique, et plus particulièrement cubique selon l'exemple représenté ici. De plus, les éléments de positionnement angulaire 13 des première 13a et deuxième 13b paires d'éléments de positionnement angulaire présentent les mêmes dimensions.

En référence à la figure 2 correspondant à une vue en coupe au niveau de la base 21 selon un plan de coupe A représenté sur les figures 3 et 4 et de manière préférée, les première et deuxième orientations sont perpendiculaires entre elles. En effet, une telle orientation des paires d'éléments de positionnement angulaire 13a, 13b permet de bien déterminer la position de référence d'usinage dans laquelle est installé le bloc de fabrication 1 dans la machine d'usinage 11. De plus, cette orientation des première et deuxième paires d'éléments de positionnement angulaire 13a, 13b renforce le maintien du bloc de fabrication 1 dans la machine d'usinage 11 et limite les vibrations de celui-ci au cours de son usinage et notamment de la partie usinable 7. Ainsi, les défauts d'usinage peuvent également être prévenus.

Par ailleurs, en référence à la figure 1, la partie usinable 7 présente un premier côté X parallèle à l'arbre de maintien 9 et dont la longueur 15 peut être comprise entre 12,0 et 22,0 mm, un deuxième côté Y perpendiculaire à l'arbre de maintien 9 et dont la longueur 17 est comprise entre 14,0 et 20,0 mm, et un troisième côté Z perpendiculaire à l'arbre de maintien 9 et dont la longueur 19 comprise entre 12,0 et 19,0 mm.

En référence à la figure 1, l'arbre de maintien 9 présente une forme sensiblement cylindrique. L'utilisation d'une forme cylindrique pour l'arbre de maintien 9 permet de bien contrôler la rotation du bloc de fabrication 1 dans la machine d'usinage 11 au cours de la fabrication du dispositif dentaire 3, 5. Ensuite, pour assurer une bonne fixation du bloc de fabrication 1 dans la machine d'usinage 11, l'arbre de maintien 9 présente une gorge de maintien circulaire 14 perpendiculaire à l'arbre de maintien 9. Cette gorge de maintien circulaire 14 est destinée à coopérer avec un élément complémentaire tel qu'un ressort présent dans la machine d'usinage 11 au niveau du mandrin 117 destiné à accueillir l'arbre de maintien 9.

Selon le mode de réalisation particulier de la figure 3, la partie usinable 7 et l'arbre de maintien 9 sont réalisés d'une seule pièce. Avantageusement, la partie usinable 7 et l'arbre de maintien 9 viennent de matière, c'est-à-dire que la partie usinable 7 et l'arbre de maintien 9 sont réalisés dans le même matériau et en même temps. Selon ce mode de réalisation particulier, le bloc de fabrication 1 est fabriqué en un matériau injectable, notamment un matériau plastique, composite, céramique ou un métal injectable, le bloc de fabrication 1 peut par exemple être mono-injecté en résine. Selon ce mode de réalisation, le procédé de fabrication du bloc de fabrication 1 comprend une étape d'obtention comprenant une étape de moulage. Cette étape de moulage comprend une sous-étape d'injection ou de co-injection d'un matériau en fusion dans un moule.

Selon une variante, le bloc de fabrication 1 peut être fabriqué en un matériau usinable, notamment un matériau plastique, composite, céramique, ou un métal usinable. Selon cette variante, l'étape d'obtention comprend une étape d'usinage notamment par fraisage ou par électroérosion.

Selon une autre variante, le bloc de fabrication 1 peut être fabriqué en un matériau imprimable en 3D, notamment en matériau sous forme solide ou liquide, photopolymérisable ou non, en plastique, en résine composite, en métal, en céramique, ou encore en un matériau biologique imprimable en 3D. Selon cette autre variante, l'étape d'obtention du bloc de fabrication 1 comprend une étape d'impression 3D du bloc de fabrication 1.

Selon encore une autre variante, l'étape d'obtention du bloc de fabrication 1 peut comprendre une étape de fusion laser.

Lorsque la partie usinable 7 et l'arbre de maintien 9 viennent de matière, la désolidarisation de ces éléments au cours de l'étape d'usinage de ce bloc de fabrication 1 peut être prévenue.

D'autre part, selon le mode de réalisation particulier de la figure 3, la partie usinable 7 du bloc de fabrication 1 présente des arêtes nettes. Une telle forme de la partie usinable 7 peut être adaptée pour l'utilisation de certains matériaux pour la fabrication de cette dernière, par exemple par injection, et notamment lorsque les matériaux utilisés sont des métaux. De plus, des moules pour l'obtention de telles formes (parallélépipédique présentant des arêtes nettes) par un procédé d'injection sont assez simples de conception.

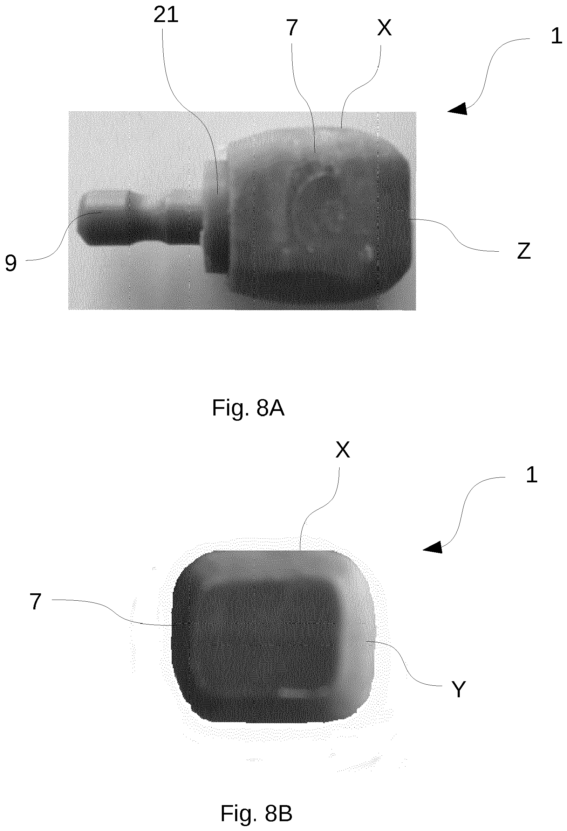

De manière alternative, et plus particulièrement lorsque le bloc de fabrication 1 est fabriqué par injection en polyamides (PA) chargés en fibres de verre par exemple, la partie usinable 7 peut présenter une forme sensiblement parallélépipédique dont les arêtes sont arrondies, comme représenté en référence aux figures 8A et 8B. En effet, certains matériaux comme les polyamides (PA) chargés en fibres de verre peuvent présenter des contraintes lors de leur mise en forme par injection et il peut être nécessaire d'éviter la présence d'angles droits dans la structure obtenue en fin de procédé d'injection. Par ailleurs, une telle forme arrondie des arêtes de la partie usinable 7 permet également de contribuer à la réduction des pertes liées aux chutes au cours de la fabrication du dispositif dentaire 3, 5. En effet, il est rare d'avoir des zones d'usinage au niveau des arêtes de la partie usinable 7, ces zones à proximité des arêtes de la partie usinable 7 sont donc généralement retrouvées dans les chutes à l'issue du procédé de fabrication du dispositif dentaire 3, 5. Ainsi, l'utilisation d'une forme parallélépipédique présentant des arêtes arrondies permet d'une part de faciliter la mise en forme du bloc de fabrication 1 selon le matériau utilisé par exemple et d'autre part de limiter les chutes lors de l'usinage de la partie usinable 7 lors du procédé de fabrication du dispositif dentaire 3, 5.

En référence à la figure 4, la partie usinable 7 et l'arbre de maintien 9 sont deux pièces distinctes fixées l'une à l'autre. Selon ce mode de réalisation, la partie usinable 7 et l'arbre de maintien 9 peuvent être réalisés dans le même matériau ou en deux matériaux distincts. Selon le mode de réalisation particulier de la figure 4, la partie usinable 7 et l'arbre de maintien 9 sont réalisés en deux matériaux distincts. Plus précisément, la partie usinable 7 est réalisée en céramiques au disulfure de lithium et l'arbre de maintien 9 est réalisé en chrome. Selon d'autres modes de réalisation, les différents éléments cités précédemment pour constituer au moins la partie usinable 7 peuvent être utilisés pour former aussi bien la partie usinable 7 que l'arbre de maintien 9. Avantageusement, dans cette configuration, la base 21 est portée par l'arbre de maintien 9.

Selon ce mode de réalisation particulier, la partie usinable 7 et l'arbre de maintien 9 peuvent être obtenus selon l'une quelconque des étapes d'obtention décrites précédemment. Par ailleurs, le procédé de fabrication du bloc de fabrication 1 met en œuvre une étape supplémentaire de jonction de la partie usinable 7 et de l'arbre de maintien 9. Cette étape supplémentaire de jonction peut être réalisée, selon ce mode de réalisation particulier, par collage.

Selon une variante, cette étape supplémentaire peut être réalisée par fusion de la partie usinable 7 avec l'arbre de maintien 9, notamment lorsque la partie usinable 7 est réalisée en un matériau thermoplastique par exemple.

Selon encore une autre variante, cette étape supplémentaire peut être réalisée par vissage de l'arbre de maintien 9 dans la partie usinable 7 par exemple.

Lorsque la partie usinable 7 et l'arbre de maintien 9 sont deux pièces distinctes, il est possible d'adapter l'arbre de maintien 9 présentant les éléments de positionnement angulaire 13 sur une partie usinable 7 existante de manière à faciliter l'installation de ce bloc de fabrication 1 dans la machine d'usinage 11 et également de prévenir les vibrations que cette partie usinable 7 peut être amenée à subir lors de son usinage.

Par ailleurs, lorsque la partie usinable 7 et l'arbre de maintien 9 sont deux pièces distinctes, la partie usinable 7 peut présenter, comme lorsque le bloc de fabrication 1 est réalisé d'une seule pièce, une forme sensiblement parallélépipédique présentant des arêtes nettes ou arrondies, comme cela est représenté en référence aux figures 8A et 8B.

En référence aux figures 5A à 6B, il est représenté le bloc de fabrication 1 dont la partie usinable 7 a été usinée par la machine d'usinage 11 (représentée partiellement sur la figure 7) afin de permettre la fabrication du dispositif dentaire 3, 5.

Plus particulièrement en référence aux figures 5A et 5B, le dispositif dentaire de première taille 3 correspond à une incisive ou à un inlay-core pour une canine. Selon ce mode de réalisation particulier, le dispositif dentaire de première taille 3 obtenu présente un point d'accroche 31 destiné à assurer le maintien du dispositif dentaire de première taille 3 à la partie usinable 7 restante située à proximité de l'arbre de maintien 9 lors de l'usinage de la partie usinable 7 afin de former le dispositif dentaire de première taille 3.

Selon le mode de réalisation des figures 6A et 6B, le dispositif dentaire de deuxième taille 5 correspond à une molaire ou à un inlay-core pour une molaire. Le dispositif dentaire de deuxième taille 5 présente également un point d'accroche 31 reliant ce dispositif dentaire de deuxième taille 5 à la partie usinable 7 faisant liaison avec l'arbre de maintien 9.

En référence aux figures 5A à 6B, la partie usinable 7 ne présente qu'un seul dispositif dentaire 3, 5.

En référence à la figure 7, il est représenté un bloc de fabrication 1 d'un dispositif dentaire 3, 5 disposé dans la machine d'usinage 11. Selon ce mode de réalisation, la machine d'usinage 11 présente un outil abrasif 111, un bloc support 113 disposé dans un rail 115, et comportant un mandrin 117.

Selon ce mode de réalisation, l'outil abrasif 111 est configuré pour usiner le bloc de fabrication 1 de manière à former le dispositif dentaire 3, 5 par enlèvement de matière. Selon ce mode de réalisation, l'outil abrasif 111 peut se déplacer selon une direction verticale V et une direction longitudinale L. Par ailleurs, selon ce mode de réalisation préféré, l'outil abrasif 111 correspond à une fraise. Cependant, selon d'autres modes de réalisation non représentés ici, l'outil abrasif 111 peut correspondre à tout autre type d'outil permettant l'usinage du bloc de fabrication 1.

Par ailleurs, le bloc support 113 est configuré pour se déplacer selon une direction horizontale H dans le rail 115. D'autre part, le mandrin 117 présente une ouverture sensiblement cylindrique configurée pour accueillir l'arbre de maintien 9 et les moyens complémentaires (non représentés) destinés à coopérer avec les éléments de positionnement angulaire 13. Les moyens complémentaires portés par le mandrin 117 permettent de positionner le bloc de fabrication 1 dans la machine d'usinage 11 de manière à pouvoir usiner la face souhaitée du bloc de fabrication 1, comme cela est expliqué ultérieurement. Par ailleurs, ces éléments complémentaires permettent de limiter les vibrations du bloc de fabrication 1 et notamment de sa partie usinable 7 au cours de son usinage. L'usinage de la partie usinable 7 peut ainsi permettre l'obtention du dispositif dentaire 3, 5 désiré tout en limitant les chutes. Par ailleurs, dans le cas de la fabrication de plusieurs dispositifs dentaires 3, 5 juxtaposés, il est possible de limiter les chutes en resserrant les dispositifs dentaires 3, 5 sur la partie usinable 7 par exemple.

La machine d'usinage 11 permet la mise en œuvre d'un procédé de fabrication d'un dispositif dentaire 3, 5 (tel que représenté en référence aux figures 5A à 6B par exemple) à partir d'un bloc de fabrication 1 tel que décrit en référence aux figures 1 à 4. Le procédé de fabrication du dispositif dentaire 3, 5 comprend une étape de fixation du bloc de fabrication 1 dans une machine d'usinage 11 par l'intermédiaire de l'arbre de maintien 9, et une étape d'enlèvement de matière dans la partie usinable 7 afin de former le dispositif dentaire 3, 5 par un outil abrasif 111. Cette étape d'enlèvement comprend une sous-étape de façonnage par abrasion à partir dudit outil abrasif 111 de tout ou partie d'une surface de la partie usinable 7 afin de former le dispositif dentaire 3, 5.

Par ailleurs, le procédé peut comprendre une étape intermédiaire d'étalonnage de la machine d'usinage 11 dans laquelle la machine d'usinage 11 reconnaît la disposition du bloc de fabrication 1. Par ailleurs, au cours de cette étape intermédiaire d'étalonnage, la machine d'usinage 11 peut reconnaître les côtes du bloc de fabrication 1 en déplaçant l'outil abrasif 111 ou le bloc support 113 pour mettre en contact l'outil abrasif 111 avec les différentes faces de la partie usinable 7.

Selon une variante, les cotes de la partie usinable 7 peuvent être entrées manuellement ou sélectionnées par le chirurgien-dentiste dans une liste de cotes préenregistrées dans un programme d'exécution de la machine d'usinage 11. Avantageusement, le chirurgien-dentiste peut choisir lors de cette étape d'étalonnage le type de dent qu'il souhaite usiner et le programme d'exécution pourra lui indiquer comment positionner le bloc de fabrication 1 dans la machine d'usinage 1. Avantageusement, la première paire d'éléments de positionnement angulaire 13a peut présenter une première couleur et la deuxième paire d'éléments de positionnement angulaire 13b peut présenter une deuxième couleur différente de la première couleur afin de faciliter l'installation du bloc de fabrication 1 dans la machine d'usinage 11.

En fin de procédé d'usinage, le dispositif dentaire 3, 5 présente un point d'accroche 31 permettant sa liaison avec la partie usinable 7 la plus proche de l'arbre de maintien 9 (comme représenté en référence aux figures 5A et 6A). Ce point d'accroche 31 est ensuite découpé pour permettre la séparation du dispositif dentaire 3, 5 de la partie usinable 7 restante lors d'une étape supplémentaire. Ce dispositif dentaire 3, 5 est ensuite poli au niveau du point d'accroche 31 au cours d'une étape finale afin de prévenir toute gêne chez le patient une fois le dispositif dentaire 3, 5 mis en place dans sa bouche.

Le procédé de fabrication du dispositif dentaire 3, 5 décrit ici permet l'obtention d'une prothèse dentaire, ou de plusieurs prothèses dentaires juxtaposées, ou d'un guide chirurgical, ou d'un inlay-core, ou encore d'une parure dentaire.

### Premier exemple de réalisation spécifique : fabrication d'un inlay-core pour une molaire.

Comme indiqué précédemment, un inlay-core pour une molaire correspond à un dispositif dentaire de deuxième taille 5. Afin de réaliser cet inlay-core, le chirurgien-dentiste utilise, selon cet exemple de réalisation spécifique, un bloc de fabrication 1 présentant un première côté X dont la longueur 15 mesure 15,0 mm, un deuxième côté Y dont la longueur 17 mesure 16,0 mm, et un troisième côté Z dont la longueur 19 mesure 15,0 mm. Le bloc de fabrication 1 présente donc une première surface usinable correspondant à la face présentant le premier côté X et le deuxième côté Y et une deuxième surface usinable correspondant à la face présentant le premier côté X et le troisième côté Z. Ces première et deuxième surfaces usinables ne présentent pas les mêmes dimensions, donc leurs surfaces sont différentes. Plus précisément la surface usinable de la première surface est plus large que la surface usinable de la deuxième surface.

Selon ce mode de réalisation particulier, le bloc de fabrication 1 présente une première paire d'éléments de positionnement 13a disposés de manière à permettre l'installation du bloc de fabrication 1 dans la machine d'usinage 11 de manière à ce que la première surface soit usinée, et une deuxième paire d'éléments de positionnement angulaire 13b disposée de manière à permettre l'installation du bloc de fabrication 1 dans la machine d'usinage 11 de manière à ce que la deuxième surface soit usinée.

Le chirurgien-dentiste entre dans le programme d'exécution de la machine d'usinage 11 son souhait de réaliser un dispositif dentaire de deuxième taille 5. Il charge un fichier de type CAO (conception assistée par ordinateur) présentant les différentes dimensions de l'inlay-core qu'il souhaite obtenir, puis il entre les côtes du bloc de fabrication 1 qu'il souhaite utiliser pour cette fabrication. Le programme d'exécution lui indique le sens dans lequel le bloc de fabrication 1 doit être installé dans la machine d'usinage 11. Selon cet exemple spécifique, le programme d'exécution indique au chirurgien-dentiste que la première surface du bloc de fabrication 1 est la surface qui doit être usinée pour la fabrication de la molaire. En effet, une molaire présente des dimensions supérieures en largeur à une incisive par exemple.

Le chirurgien-dentiste installe donc le bloc de fabrication 1 dans la machine d'usinage 11 tel qu'indiqué par le programme d'exécution, c'est-à-dire avec la première paire d'éléments de positionnement angulaire 13a disposée sensiblement parallèlement à l'axe de rotation de l'outil abrasif 111, et lance ensuite le procédé d'usinage. Lors de l'installation du bloc de fabrication 1 dans la machine d'usinage 11, les éléments de positionnement angulaire 13 (visibles par exemple sur la figure 1), correspondant à des retraits de matière, coopèrent avec des protubérances portées par le mandrin de la machine d'usinage 11. Selon ce premier exemple spécifique, la machine d'usinage 11 peut s'étalonner et éventuellement envoyer une information d'erreur en cas de mauvaise installation du bloc de fabrication 1 dans la machine d'usinage 11. Une fois étalonnée, la machine d'usinage 11 usine la partie usinable 7 du bloc de fabrication selon les dimensions présentes dans le fichier CAO. Pour ce faire, l'outil abrasif 111 usine dans un premier temps une partie supérieure du bloc de fabrication 1 puis se relève afin de permettre au mandrin 117 de faire effectuer au bloc de fabrication 1 une rotation de 180° à l'intérieur de la machine d'usinage 11 afin que l'outil abrasif 111 usine une partie inférieure opposée à la partie supérieure du bloc de fabrication 1 afin de permettre l'obtention de la molaire désirée.

En fin de procédé de fabrication, le chirurgien sépare la molaire ainsi obtenue (semblable au dispositif dentaire représenté en référence aux figures 6A et 6B) du reste de la partie usinable 7 proche de l'arbre de maintien 9, polit le point d'accroche 31 restant et peut ensuite mettre en place cette molaire dans la bouche de son patient. De manière optionnelle, le chirurgien-dentiste peut effectuer une étape additionnelle de coloration ou de teinte de la molaire obtenue afin qu'elle présente les même caractéristiques que les dents présentes chez son patient.

La fabrication d'une molaire se déroule de la même manière que décrit ci-dessus. En effet, la molaire présente des dimensions supérieures en largeur et inférieures en hauteur qu'une incisive par exemple.

### Deuxième exemple de réalisation spécifique : fabrication d'un inlay-core pour une canine.

Comme rappelé précédemment, un inlay-core pour une canine correspond à un dispositif dentaire de première taille 3. Par ailleurs un inlay-core pour une canine présente une largeur inférieure et une profondeur supérieure à celles d'un inlay-core pour une molaire (comme décrit ci-dessus).

Selon ce deuxième exemple de réalisation spécifique, le chirurgien-dentiste utilise un bloc de fabrication 1 présentant les mêmes dimensions que celui utilisé pour le premier exemple de réalisation spécifique.

Les différentes étapes mises en œuvre dans ce deuxième exemple spécifique sont identiques à celles décrites ci-dessus. Cependant, le programme d'exécution indique au chirurgien dentaire que la deuxième surface du bloc de fabrication 1 est la surface qui va être usinée. L'installation du bloc de fabrication 1 dans la machine d'usinage 11 est donc différente. En effet, le bloc de fabrication 1 est installé dans la machine d'usinage 11 de manière à permettre l'usinage de la deuxième surface pour permettre l'obtention de l'inlay-core pour une canine désiré, c'est-à-dire avec la deuxième paire d'éléments de positionnement angulaire 13b disposée sensiblement parallèlement à l'axe de rotation de l'outil abrasif 111. En fin de procédé, le chirurgien dentiste obtient le dispositif dentaire de première taille 3, comme représenté en référence aux figures 6A et 6B.

La fabrication d'une incisive se déroule de la même manière que celle décrite ci-dessus en installant le bloc de fabrication 1 dans la machine d'usinage 11 de manière à ce que la deuxième surface du bloc de fabrication 1 soit usinée.

Les exemples de réalisation ci-dessus sont décrits à titre d'exemples illustratifs et non limitatifs. En effet, il est tout à fait possible pour l'homme de l'art de remplacer la forme ou les matériaux utilisés pour la partie usinable 7 sans sortir du cadre de la présente invention. D'autre part, il est tout à fait possible pour l'homme de l'art de modifier les dimensions de la partie usinable 7 sans sortir du cadre de la présente invention. Par ailleurs, il est tout à fait possible pour l'homme de l'art d'utiliser un autre élément présentant des propriétés de radio-opacité que le baryum ou de l'alumine afin de permettre au dispositif dentaire 3, 5 d'être facilement détectable lors d'une radiographie des dents. De plus, l'homme de l'art pourra adapter la forme des éléments de positionnement angulaire 13, de la base 21, ou encore de l'arbre de maintien 9 sans sortir du cadre de la présente invention. Enfin, l'homme de l'art pourra mettre en œuvre les étapes du bloc d'obtention du bloc de fabrication 1 et éventuellement l'étape supplémentaire par d'autres moyens que ceux décrits ci-dessus sans sortir du cadre de la présente invention.

Ainsi, la détermination du positionnement d'un bloc de fabrication 1 d'un dispositif dentaire 3, 5 ainsi que la limitation des chutes liées à son usinage et des défauts d'usinage liés aux vibrations est possible grâce à la présence d'au moins deux éléments de positionnement angulaire 13 disposés au niveau d'un point de liaison entre la partie usinable 7 et l'arbre de maintien 9 du bloc de fabrication 1, lesdits éléments de positionnement angulaire 13 étant configurés pour coopérer avec des moyens complémentaires portés par la machine d'usinage 11. En effet, les éléments de positionnement angulaire 13 permettent entre autre de d'améliorer la stabilité de la partie usinable 7 du bloc de fabrication 1 au cours de son usinage en limitant les vibrations du bloc de fabrication 1 au cours de son usinage, limitant ainsi les erreurs d'usinage. Par ailleurs, les éléments de positionnement angulaire 13 assurent une bonne installation du bloc de fabrication 1 dans la machine d'usinage 11 et permettent un étalonnage plus simple et rapide de cette machine d'usinage 11.

## Revendications

1. Ensemble comportant une machine d'usinage (11) et un bloc de fabrication (1) de dispositifs dentaires d'au moins une première taille (3) et d'une deuxième taille (5), comprenant au moins une partie usinable (7) de forme sensiblement parallélépipédique, dont la longueur d'au moins un côté est différente de la longueur des autres côtés, destinée à être usinée pour former le dispositif dentaire (3, 5), et un arbre de maintien (9) destiné à permettre la fixation du bloc de fabrication (1) dans la machine d'usinage (11), l'ensemble étant **caractérisé en ce que** le bloc de fabrication (1) comprend en outre au moins deux éléments de positionnement angulaire (13) disposés au niveau du point de liaison entre la partie usinable (7) et l'arbre de maintien (9) et agencés selon des orientations perpendiculaires entre elles, lesdits éléments de positionnement angulaire (13) coopérant avec des moyens complémentaires portés par la machine d'usinage (11) de manière à servir de référence pour l'installation du bloc de fabrication (1) dans la machine d'usinage (11) pour définir une première position de référence d'usinage permettant l'usinage d'une incisive ou d'un inlay-core pour une canine et une deuxième position de référence d'usinage perpendiculaire à la première position et permettant l'usinage d'une molaire ou d'un inlay-core pour une molaire.

2. Ensemble selon la revendication précédente, **caractérisé en ce que** le bloc de fabrication (1) d'un dispositif dentaire (3, 5) comprend quatre éléments de positionnement angulaire (13) formant une première paire d'éléments de positionnement angulaire (13a) et une deuxième paire d'éléments de positionnement angulaire (13b), chaque paire d'éléments de positionnement angulaire (13a, 13b) présentant deux éléments de positionnement angulaire (13) disposés de part et d'autre de l'arbre de maintien (9) et alignés l'un avec l'autre selon une première orientation pour la première paire d'éléments de positionnement angulaire (13a) et selon une deuxième orientation pour la deuxième paire d'éléments de positionnement angulaire (13b), lesdites première et deuxième orientations étant perpendiculaires entre elles.

3. Ensemble selon l'une quelconque des revendications précédentes, **caractérisé en ce que** les au moins deux éléments de positionnement angulaire (13) du bloc de fabrication (1) d'un dispositif dentaire (3, 5) correspondent à des retraits de matière destinés à coopérer avec des protubérances portées par la machine d'usinage (11).

4. Ensemble selon l'une quelconque des revendications précédentes, **caractérisé en ce que** la partie usinable (7) du bloc de fabrication (1) présente un premier côté (X) parallèle à l'arbre de maintien (9) et dont la longueur (15) est comprise entre 12,0 et 22,0 mm, un deuxième côté (Y) perpendiculaire à l'arbre de maintien (9) et dont la longueur (17) est comprise entre 14,0 et 20,0 mm, et un troisième côté (Z) perpendiculaire à l'arbre de maintien (9) et dont la longueur (19) comprise entre 12,0 et 19,0 mm.

5. Ensemble selon l'une quelconque des revendications précédentes, **caractérisé en ce que** la partie usinable (7) du bloc de fabrication (1) est réalisée en un matériau présentant des caractéristiques de hautes performances mécaniques, d'usinabilité et/ou de biocompatibilité, notamment un matériau plastique, un matériau métallique, ou un matériau composite, et comprenant au moins un additif de renforcement mécanique présentant une concentration massique comprise entre 17 et 40 %, de préférence comprise entre 25 et 30 %, de la masse de matériau composant au moins la partie usinable (7) lorsque la partie usinable est réalisée en un matériau plastique ou en un matériau composite.

6. Ensemble selon la revendication 5, **caractérisé en ce que** le matériau dans lequel est réalisée la partie usinable (7) du bloc de fabrication (1) comprend en outre un composé additionnel radio-opaque, et de préférence du baryum ou de l'alumine, lorsque la partie usinable est réalisée en un matériau plastique ou en un matériau composite.

7. Ensemble selon l'une quelconque des revendications précédentes, **caractérisé en ce que** le bloc de fabrication (1) présente en outre une base (21) disposée entre la partie usinable (7) et l'arbre de maintien (9), et **en ce que** ladite base (21) comporte les au moins deux éléments de positionnement angulaire (13).

8. Ensemble selon l'une quelconque des revendications précédentes, **caractérisé en ce que** la partie usinable (7) et l'arbre de maintien (9) du bloc de fabrication (1) sont réalisés d'une seule pièce.

9. Ensemble selon l'une quelconque des revendications 1 à 7, **caractérisé en ce que** la partie usinable (7) et l'arbre de maintien (9) du bloc de fabrication (1) sont deux pièces distinctes fixées l'une à l'autre.

10. Ensemble selon l'une quelconque des revendications précédentes, **caractérisé en ce que** la forme sensiblement parallélépipédique de la partie usinable (7) du bloc de fabrication (1) présente des arêtes nettes.

11. Ensemble selon l'une quelconque des revendications 1 à 9, **caractérisé en ce que** la forme sensiblement parallélépipédique de la partie usinable (7) du bloc de fabrication (1) présente des arêtes arrondies.

## Patentansprüche

1. Einheit, umfassend eine Bearbeitungsmaschine (11) und einen Herstellungsblock (1) für Dentalvorrichtungen mindestens einer ersten Größe (3) und einer zweiten Größe (5), beinhaltend mindestens einen bearbeitbaren Teil (7) mit einer im Wesentlichen parallelepipedischen Form, bei dem sich die Länge mindestens einer Seite von der Länge der anderen Seiten unterscheidet und der dazu bestimmt ist, bearbeitet zu werden, um die Dentalvorrichtung (3, 5) zu bilden, und eine Haltewelle (9), die dazu bestimmt ist, die Befestigung des Herstellungsblocks (1) in der Bearbeitungsmaschine (11) zu ermöglichen, wobei die Einheit **dadurch gekennzeichnet ist, dass** der Herstellungsblock (1) ferner mindestens zwei Elemente zur Winkelpositionierung (13) beinhaltet, die im Bereich des Verbindungspunkts zwischen dem bearbeitbaren Teil (7) und der Haltewelle (9) angeordnet und gemäß zueinander senkrecht stehenden Ausrichtungen eingerichtet sind, wobei die Elemente zur Winkelpositionierung (13) mit komplementären Mitteln, die von der Bearbeitungsmaschine (11) getragen werden, zusammenwirken, um als Referenz für die Montage des Herstellungsblocks (1) in der Bearbeitungsmaschine (11) zu dienen, um eine erste Bearbeitungsreferenzposition, die die Bearbeitung eines Schneidezahns oder eines Wurzelstifts für einen Eckzahn ermöglicht, und eine zweite Bearbeitungsreferenzposition, die zu der ersten Position senkrecht ist und die Bearbeitung eines Backenzahns oder eines Wurzelstifts für einen Backenzahn ermöglicht, zu definieren.

2. Einheit nach dem vorhergehenden Anspruch, **dadurch gekennzeichnet, dass** der Herstellungsblock (1) für eine Dentalvorrichtung (3, 5) vier Elemente zur Winkelpositionierung (13) beinhaltet, die ein erstes Paar Elemente zur Winkelpositionierung (13a) und ein zweites Paar Elemente zur Winkelpositionierung (13b) bilden, wobei jedes Paar Elemente zur Winkelpositionierung (13a, 13b) zwei Elemente zur Winkelpositionierung (13) aufweist, die auf beiden Seiten der Haltewelle (9) angeordnet und gemäß einer ersten Ausrichtung für das erste Paar Elemente zur Winkelpositionierung (13a) und gemäß einer zweiten Ausrichtung für das zweite Paar Elemente zur Winkelpositionierung (13b) zueinander ausgerichtet sind, wobei die erste und die zweite Ausrichtung zueinander senkrecht sind.

3. Einheit nach einem der vorhergehenden Ansprüche, **dadurch gekennzeichnet, dass** die mindestens zwei Elemente zur Winkelpositionierung (13) des Herstellungsblocks (1) für eine Dentalvorrichtung (3, 5) Materialaussparungen entsprechen, die dazu bestimmt sind, mit durch die Bearbeitungsmaschine (11) getragenen Vorsprüngen zusammenzuwirken.

4. Einheit nach einem der vorhergehenden Ansprüche, **dadurch gekennzeichnet, dass** der bearbeitbare Teil (7) des Herstellungsblocks (1) eine erste Seite (X), die zu der Haltewelle (9) parallel ist und deren Länge (15) zwischen 12,0 und 22,0 mm beträgt, eine zweite Seite (Y), die zu der Haltewelle (9) senkrecht ist und deren Länge (17) zwischen 14,0 und 20,0 mm beträgt, und eine dritte Seite (Z), die zu der Haltewelle (9) senkrecht ist und deren Länge (19) zwischen 12,0 und 19,0 mm beträgt, aufweist.

5. Einheit nach einem der vorhergehenden Ansprüche, **dadurch gekennzeichnet, dass** der bearbeitbare Teil (7) der Herstellungsblocks (1) aus einem Material hergestellt ist, das Eigenschaften einer hohen mechanischen Festigkeit, einer Bearbeitbarkeit und/oder einer Biokompatibilität aufweist, insbesondere aus einem Kunststoff, einem Metall oder einem Verbundmaterial, und das mindestens einen Zusatzstoff zur mechanischen Verstärkung beinhaltet, der eine Massenkonzentration zwischen 17 und 40 %, vorzugsweise zwischen 25 und 30 %, der Materialmasse, die mindestens den bearbeitbaren Teil (7) bildet, aufweist, wenn das bearbeitbare Teil aus einem Kunststoff oder einem Verbundmaterial hergestellt ist.

6. Einheit nach Anspruch 5, **dadurch gekennzeichnet, dass** das Material, aus dem der bearbeitbare Teil (7) des Herstellungsblocks (1) hergestellt ist, ferner eine zusätzliche strahlenundurchlässige Verbindung und vorzugsweise Barium oder Aluminiumoxid beinhaltet, wenn der bearbeitbare Teil aus einem Kunststoff oder einem Verbundmaterial hergestellt ist.

7. Einheit nach einem der vorhergehenden Ansprüche, **dadurch gekennzeichnet, dass** der Herstellungsblock (1) ferner eine Basis (21) aufweist, die zwischen dem bearbeitbaren Teil (7) und der Haltewelle (9) angeordnet ist, und dass die Basis (21) die mindestens zwei Elemente zur Winkelpositionierung (13) umfasst.

8. Einheit nach einem der vorhergehenden Ansprüche, **dadurch gekennzeichnet, dass** der bearbeitbare Teil (7) und die Haltewelle (9) des Herstellungsblocks (1) einstückig hergestellt sind.

9. Einheit nach einem der Ansprüche 1 bis 7, **dadurch gekennzeichnet, dass** der bearbeitbare Teil (7) und die Haltewelle (9) des Herstellungsblocks (1) zwei separate Teile sind, die aneinander befestigt sind.

10. Einheit nach einem der vorhergehenden Ansprüche, **dadurch gekennzeichnet, dass** die im Wesentlichen parallelepipedische Form des bearbeitbaren Teils (7) des Herstellungsblocks (1) eckige Kanten aufweist.

11. Einheit nach einem der Ansprüche 1 bis 9, **dadurch gekennzeichnet, dass** die im Wesentlichen parallelepipedische Form des bearbeitbaren Teils (7) des Herstellungsblocks (1) abgerundete Kanten aufweist.

## Claims

1. Assembly comprising a machine tool (11) and a block (1) for production of dental devices of at least a first size (3) and a second size (5), comprising at least one machinable part (7) of substantially parallelepipedal shape in which the length of at least one side is different from the length of the other sides and which is intended to be machined in order to form the dental device (3, 5), and a holding shaft (9) intended to enable the production block (1) to be fixed in the machine tool (11), the assembly being **characterized in that** the production block (1) further comprises at least two angular positioning elements (13) which are disposed at the point of connection between the machinable part (7) and the holding shaft (9) and are arranged in directions perpendicular to each other, said angular positioning elements (13) cooperating with complementary means carried by the machine tool (11) so as to serve as a reference for the installation of the production block (1) in the machine tool (11), in order to define a first machining reference position, permitting the machining of an incisor or of an inlay-core for a canine, and a second machining reference position perpendicular to the first position and permitting the machining of a molar or of an inlay-core for a molar.

2. Assembly according to the preceding claim, **characterized in that** the block (1) for production of a dental device (3, 5) comprises four angular positioning elements (13) forming a first pair of angular positioning elements (13a) and a second pair of angular positioning elements (13b), each pair of angular positioning elements (13a, 13b) having two angular positioning elements (13) disposed on either side of the holding shaft (9) and aligned with each other in a first orientation for the first pair of angular positioning elements (13a) and in a second orientation for the second pair of angular positioning elements (13b), said first and second orientations being perpendicular to each other.

3. Assembly according to either of the preceding claims, **characterized in that** the at least two angular positioning elements (13) of the block (1) for production of a dental device (3, 5) correspond to material recesses intended to cooperate with protuberances carried by the machine tool (11).

4. Assembly according to any one of the preceding claims, **characterized in that** the machinable part (7) of the production block (1) has a first side (X) which is parallel to the holding shaft (9) and whose length (15) is between 12.0 and 22.0 mm, a second side (Y) which is perpendicular to the holding shaft (9) and whose length (17) is between 14.0 and 20.0 mm, and a third side (Z) which is perpendicular to the holding shaft (9) and whose length (19) is between 12.0 and 19.0 mm.

5. Assembly according to any one of the preceding claims, **characterized in that** the machinable part (7) of the production block (1) is made of a material having characteristics of high mechanical performance, machinability and/or biocompatibility, in particular a plastic material, a metallic material, or a composite material, and comprising at least one mechanical reinforcement additive having a mass concentration of between 17 and 40%, preferably of between 25 and 30%, of the mass of material composing at least the machinable part (7) when the machinable part is made of a plastic material or of a composite material.

6. Assembly according to Claim 5, **characterized in that** the material from which the machinable part (7) of the production block (1) is made further comprises an additional radiopaque compound, and preferably barium or alumina, when the machinable part is made of a plastic material or of a composite material.

7. Assembly according to any one of the preceding claims, **characterized in that** the production block (1) further comprises a base (21) disposed between the machinable part (7) and the holding shaft (9), and **in that** said base (21) has the at least two angular positioning elements (13).

8. Assembly according to any one of the preceding claims, **characterized in that** the machinable part (7) and the holding shaft (9) of the production block (1) are made in one piece.

9. Assembly according to any one of Claims 1 to 7, **characterized in that** the machinable part (7) and the holding shaft (9) of the production block (1) are two separate parts fixed to each other.

10. Assembly according to any one of the preceding claims, **characterized in that** the substantially parallelepipedal shape of the machinable part (7) of the production block (1) has sharp edges.

11. Assembly according to any one of Claims 1 to 9, **characterized in that** the substantially parallelepipedal shape of the machinable part (7) of the production block (1) has rounded edges.
